# NEUE EUROPÄISCHE PATENTSCHRIFT

(11) **EP 1 178 287 B2**
(45) Veröffentlichungstag und Bekanntmachung des Hinweises auf die Entscheidung über den Einspruch: **02.12.2009**
(45) Hinweis auf die Patenterteilung: 13.12.2006
(21) Anmeldenummer: 01115588.4
(22) Anmeldetag: 28.06.2001
(51) Int. Cl.: G01C 21/36

(54) **Navigationssystem und Verfahren zur Darstellung von Informationen in Navigationssystemen**
Navigation system and method of representing information in navigation systems
Système de navigation et méthode de représentation d'information dans des systèmes de navigation

(30) Priorität: 31.07.2000 DE 10037207
(43) Veröffentlichungstag der Anmeldung: 06.02.2002
(73) Patentinhaber: Volkswagen Aktiengesellschaft, 38436 Wolfsburg (DE)
(72) Erfinder: Petzold,Bernd,Dr.Ing., 31234 Edernissen (DE); Sievers, Stefan, 38553 Wasbüttel (DE); Kriegel, Dieter, 38528 Adenbüttel (DE); Hartkopp, Oliver, 31234 Edemissen (DE); Dobberkau, Thomas, 38527 Meine (DE)
(74) Vertreter: Rabe, Andreas

(56) Entgegenhaltungen:
- EP-A- 0 539 143
- EP-A- 0 802 516
- EP-A- 0 836 167
- DE-A- 19 743 371
- DE-A1- 1 411 147
- DE-A1- 4 118 606
- DE-A1- 19 852 659
- JP-A- 10 123 943
- US- - 5 739 773
- US-A- 5 739 773

## Beschreibung

Die Erfindung betrifft ein Navigationssystem und ein Verfahren zur Darstellung von Informationen in Navigationssystemen.

Navigationssysteme dienen zur Berechnung von Zielrouten von einer aktuellen Position zu einem gewünschten Zielpunkt. Diese berechnete Fahrtroute wird dann mittels einer digitalen Straßenkarte auf einer Anzeigeeinheit dargestellt und der Kraftfahrzeugführer mittels optischer und/oder akustischer Fahrtrichtungshinweise zum gewünschten Zielpunkt gelotst. Dabei wird die jeweils aktuelle Position des Kraftfahrzeuges durch eine Positionserfassungseinrichtung bestimmt, die beispielsweise als GPS-Empfänger ausgebildet ist.

Des weiteren ist es bekannt, Zusatzinformationen, sogenannte "Points of Interest, entlang der Fahrtroute anzuzeigen. Diese Zusatzinformationen können beispielsweise Verkehrshinweise, Parkplätze, Restaurants, Sehenswürdigkeiten und ähnliches sein. Diese Zusatzinformationen werden dann alphanumerisch und/oder piktogrammförmig mittels Icons auf der digitalen Straßenkarte dargestellt. Diese Zusatzinformationen sind entweder in dem Datenspeicher des Navigationssystems abgelegt oder aber über eine Datenfernverbindung abrufbar.

Aus der US 5,739,773 ist weiterhin ein System zur Darstellung von Verkehrsinformationen wie beispielsweise Stauhinweisen bekannt, die in Abhängigkeit ihrer Entfernung zur eigenen Position in unterschiedlicher Art dargestellt werden können.

Allgemein stellt sich bei Navigationssystemen das Problem, die Informationen so selbsterklärend wie möglich darzustellen bzw. den Kraftfahrzeugführer Hilfestellungen zukommen zu lassen, dass dieser die Informationen voll ausschöpfen kann, ohne zu stark vom Verkehrsgeschehen abgelenkt zu werden

Der Erfindung liegt daher das technische Problem zugrunde, ein Navigationssystem und ein Verfahren zur Darstellung von Informationen in Navigationssystemen zu schaffen, mittels derer der Kraftfahrzeugführer besser informiert wird.

Die Lösung des technischen Problems ergibt sich durch die Gegenstände mit den Merkmalen der Patentansprüche 1 und 3. Weitere vorteilhafte Ausgestaltungen der Erfindung ergeben sich aus den Unteransprüchen.

Hierzu werden mindestens einzelnen Zusatzinformationen Kriterien zugeordnet, bei deren Erfüllung eine optische und/oder akustische Warnmeldung erfolgt. Dadurch wird sichergestellt, dass der Kraftfahrzeugführer die Zusatzinformationen rechtzeitig wahrnimmt.

In einer bevorzugten Ausführungsform werden die Icons bei Erfüllung der Kriterien in einer anderen Größe und/oder Farbe und/oder blinkend dargestellt. Es sind jedoch auch optische Warnmeldungen außerhalb der Anzeigeeinheit möglich. Weiter sind auch zusätzliche alphanumerische Angaben als Warnmeldung möglich.

Die Kriterien sind routenspezifisch, d.h. den Zusatzinformationen wird eine Zeit bis zum Erreichen zugeordnet, so dass die Überprüfung auf Erfüllung durch das Navigationssystem selbst durchgeführt werden kann.

Die Erfindung wird nachfolgend anhand eines bevorzugten Ausführungsbeispiels näher erläutert. Die Fig. zeigen:
- Fig. 1: eine Darstellung einer digitalen Straßenkarte mit Zusatzinformationen zur Erfüllung eines zugeordneten Kriteriums und
- Fig. 2: eine Darstellung gemäß Fig. 1 nach Erfüllung des Kriteriums.

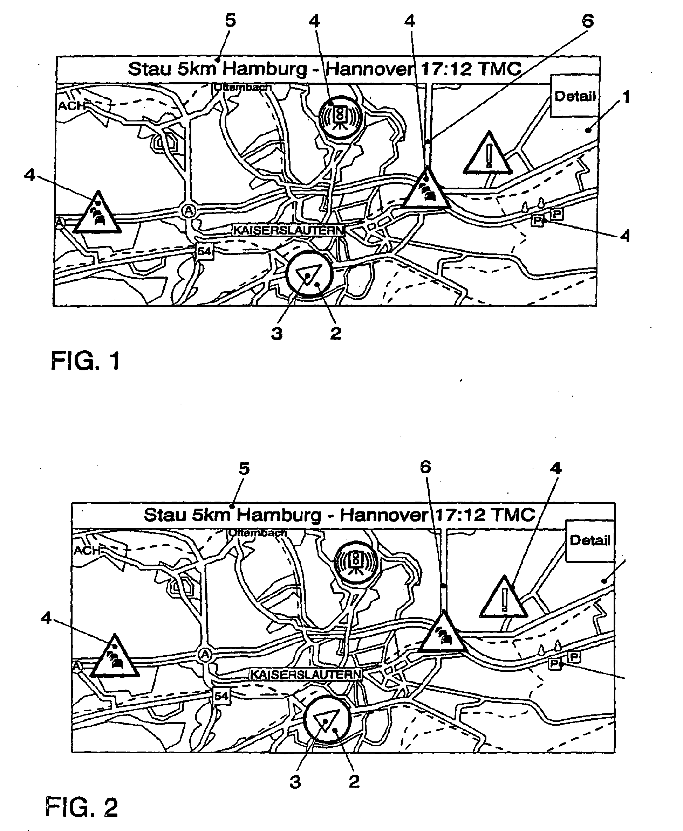

In der Fig. 1 ist eine digitale Straßenkarte 1 dargestellt. Die Darstellung umfaßt einen Positionsanzeiger 2, in dem ein Fahrtrichtungsanzeiger 3 angeordnet ist und mehrere Icons 4, die die Position von Verkehrshinweisen und Parkplätzen symbolisieren. Dabei werden die Verkehrsmeldungen symbolisierenden Icons 4 aus Verkehrsnachrichten generiert, die beispielsweise von einem Rundfunksender oder einer Verkehrsleitzentrale ausgestrahlt werden. Diese werden durch entsprechende Empfangseinrichtungen empfangen und nach Ort und Art der Verkehrsmeldung klassifiziert. Danach wird das entsprechende Icon an der zugehörigen Position in der digitalen Straßenkarte 1 dargestellt. Über eine Eingabeeinheit kann der Kraftfahrzeugführer auswählen, welche zusätzlichen Informationen dieser entlang der Fahrtroute wünscht. Oberhalb der digitalen Straßenkarte 1 ist ein Feld 5 für alphanumerische Zusatzinformationen angeordnet, das stets dem nächstliegenden Icon 4 zugeordnet ist. Im dargestellten Beispiel ist dies das Icon 4, das die Staumeldung symbolisiert. Zur Verdeutlichung der Zuordnung ist zwischen dem Icon 4 und dem Feld 5 eine Verbindungslinie 6 dargestellt. Über die Eingabeeinheit kann der Nutzer den angeforderten Zusatzinformationen Kriterien zuordnen. Als Kriterium kommen dabei die Entfernung und die verbleibende Zeit bis zum Erreichen des zugeordneten Punktes in Frage. Dabei sei angenommen, der Nutzer hätte als Kriterium eingegeben, dass er 1 km vor Erreichung des Punktes gewarnt werden möchte.

In Fig. 2 ist dargestellt, wie der Nutzer gewarnt wird, wenn das Kriterium erfüllt ist. Hierzu wird das zugehörige Icon 4 vergrößert und gegebenenfalls in einer anderen Farbe dargestellt, so dass dieses sofort augenfällig ist. Zusätzlich kann auch eine akustische Warnmeldung, beispielsweise der Form "Bitte Zusatzinformation beachten" oder "Achtung Stau", erfolgen.

## Patentansprüche

1. Verfahren zur Darstellung von Informationen in Navigationssystemen mittels einer auf einer Anzeigeeinheit dargestellten digitalen Straßenkarte (1), wobei Zusatzinformationen, denen eine Position zugeordnet ist, zu einer berechneten Zielroute als Icons (4) auf der digitalen Straßenkarte (1) dargestellt werden, mindestens einzelne Zusatzinformationen vom Nutzer ausgewählt werden und mindestens einzelnen Zusatzinformationen Kriterien zugeordnet sind, bei deren Erfüllung eine optische und/oder akustische Warnmeldung erfolgt, **dadurch gekennzeichnet, dass** ein Kriterium die verbleibende Zeit bis zum Erreichen einer der Zusatzinformation zugeordneten Position ist.

2. Verfahren nach Anspruch 1, **dadurch gekennzeichnet, dass** bei Erfüllung der Kriterien die Icons (4) in anderer Größe und/oder anderer Farbe und/oder blinkend dargestellt werden.

3. Navigationssystem zur Darstellung von Zusatzinformation, denen eine Position zugeordnet ist und die als Icons (4) auf einer digitalen Straßenkarte (1) darstellbar sind, wobei das Navigationssystem eine Eingabeeinheit aufweist, über die Zusatzinformationen zu einer berechneten Zielroute auswählbar sind und über die den Zusatzinformationen Kriterien zuordenbar sind, in deren Abhängigkeit optische und/oder akustische Warnmeldungen erzeugbar sind, **dadurch gekennzeichnet, dass** ein Kriterium die verbleibende Zeit bis zum Erreichen einer der Zusatzinformation zugeordneten Position ist.

## Claims

1. Method of representing information in navigation systems, by means of a digital roadmap (1) which is represented on a display unit, additional information items to which a position is assigned and which relate to a calculated target route being represented as icons (4) on the digital roadmap (1), at least individual additional information items being selected by the user, and criteria whose fulfilment gives rise to an optical and/or audible warning message being assigned to at least individual additional information items, **characterized in that** a criterion is the remaining time until a position which is assigned to the additional information item is reached.

2. Method according to Claim 1, **characterized in that** when the criteria are fulfilled the icons (4) are represented with a different size and/or in a different colour and/or in a flashing form.

3. Navigation system for representing additional information items to which a position is assigned and which can be represented as icons (4) on a digital roadmap (1), the navigation system has an input unit by means of which additional information items relating to a calculated target route can be selected and by means of which criteria as a function of which optical and/or audible warning messages can be generated can be assigned to the additional information items, **characterized in that** a criterion is the remaining time until a position which is assigned to the additional information item is reached.

## Revendications

1. Procédé de représentation d'informations dans des systèmes de navigation, au moyen d'une carte routière numérique (1) représentée sur une unité d'affichage, des informations supplémentaires, auxquelles on affecte une position et concernant un itinéraire calculé étant représentées sous forme d'icônes (4) sur la carte routière numérique (1), au moins des informations supplémentaires individuelles étant choisies par l'utilisateur et au moins des informations supplémentaires individuelles étant associées à des critères qui donnent lieu, lorsqu'ils sont satisfaits, à un avertissement optique et/ou sonore, **caractérisé en ce qu'**un critère est le temps restant jusqu'à l'obtention d'une position associée aux informations supplémentaires.

2. Procédé selon la revendication 1, **caractérisé en ce que** lorsque les critères sont satisfaits, les icônes (4) sont représentées dans une taille différente et/ou dans une couleur différente et/ou clignotent.

3. Système de navigation destiné à représenter des informations supplémentaires, auxquelles on affecte une position et qui peuvent être représentées sous forme d'icônes (4) sur une carte routière numérique (1),
le système de navigation présentant une unité d'entrée par le biais de laquelle des informations supplémentaires concernant un itinéraire calculé peuvent être sélectionnées et par le biais de laquelle des critères peuvent être affectés aux informations supplémentaires, en fonction desquels critères des avertissements optiques et/ou sonores peuvent être produits, **caractérisé en ce qu'**un critère est le temps restant jusqu'à l'obtention d'une position associée aux informations supplémentaires.
